# EUROPÄISCHE PATENTSCHRIFT

(11) **EP 1 167 134 B1**
(45) Veröffentlichungstag und Bekanntmachung des Hinweises auf die Patenterteilung: **29.09.2004**
(21) Anmeldenummer: 01109431.5
(22) Anmeldetag: 23.04.2001
(51) Int. Cl.: B60R 25/02, B60R 25/06

(54) **Schloss, insbesondere zum Verriegeln der Lenkspindel oder der Zahnstange des Lenkgetriebes oder der Ausgangswelle des Antriebsgetriebes eines Kraftfahrzeugs**
Lock, in particular for locking the steering column or the steering rack or the transmission output shaft of a motor vehicle
Verrou, notamment destiné au verrouillage de la colonne ou la crémaillère de direction ou de l'arbre de sortie de la transmission d'un véhicule à moteur

(30) Priorität: 23.06.2000 DE 10030688
(43) Veröffentlichungstag der Anmeldung: 02.01.2002
(73) Patentinhaber: HUF HÜLSBECK & FÜRST GMBH & CO. KG, 42551 Velbert (DE)
(72) Erfinder: Limburg, Hans-Joachim, 85247 Schwabhausen (DE); Zauser, Ludwig, 82216 Gernlinden (DE); Zillmann, Horst, 81243 München (DE)
(74) Vertreter: Oedekoven, Wolf-Dieter, Dipl.-Ing.

(56) Entgegenhaltungen:
- DE-A- 19 929 435
- DE-C- 4 436 326

## Beschreibung

Die Erfindung bezieht sich auf ein Schloß, insbesondere zum Verriegeln der Lenkspindel oder der Zahnstange des Lenkgetriebes oder der Ausgangswelle des Antriebsgetriebes eines Kraftfahrzeugs, mit einem Sperrglied, welches zwischen einer Verriegelungsstellung und einer Entriegelungsstellung hin- und herbewegbar ist, und mit einem mittels eines Antriebs hin- und herdrehbaren Steuerglied zur Axialverschiebung eines mit dem Sperrglied zusammenwirkenden Betätigungsgliedes oder des Sperrgliedes selbst in der einen oder in der anderen Richtung.

Es ist ein Schloß dieser Gattung bekannt, bei dem besondere Maßnahmen getroffen sind, um sicherzustellen, daß das Sperrglied stets nur genau bis in die Verriegelungsstellung oder in die Entriegelungsstellung und nicht weiter läuft, auch dann nicht, wenn sich das Steuerglied danach noch weiter dreht, sein Antrieb also nicht augenblicklich stillsteht, sobald das Sperrglied die Verriegelungsstellung oder die Entriegelungsstellung erreicht hat. Zu diesem Zweck sind das Betätigungsglied oder das Sperrglied und das Steuerglied koaxial angeordnet und wirken das Betätigungsglied oder das Sperrglied und das Steuerglied über
a) zwei radiale Vorsprünge, welche einander bezüglich der Drehachse des Steuergliedes diametral gegenüberliegen und jeweils senkrecht zur Drehachse des Steuergliedes beweglich sowie federbelastet sind, und
b) zwei Schrägflächen sowie zwei Endflächen, welche in derselben zur Drehachse des Steuergliedes senkrechten Ebene liegen und jeweils an die eine oder an die andere Schrägfläche anschließen, um sich bis neben die andere oder die eine Schrägfläche zu erstrecken,
derart zusammen, daß das innere Betätigungsglied oder das innere Sperrglied beim Drehen des äußeren Steuergliedes in derjenigen Richtung, in welcher die Vorsprünge auf den Schrägflächen zu den Endflächen hinlaufen, entsprechend axial verschoben wird, um dann, wenn die Vorsprünge von den Schrägflächen auf die Endflächen übergehen, stillzustehen und in der erreichten Axialstellung zu bleiben, bis das Steuerglied in der entgegengesetzten Richtung gedreht wird und die Vorsprünge auf den Schrägflächen von den Endflächen weg laufen, so daß das Betätigungsglied oder das Sperrglied sich in der entgegengesetzten Richtung axial verschiebt. Die Vorsprünge können am Betätigungsglied oder am Sperrglied vorgesehen sein, die Schrägflächen und die Endflächen am Steuerglied, wobei die Vorsprünge von zwei Stiften gebildet sein können, welche in einer gemeinsamen Querbohrung des Betätigungsgliedes oder des Sperrgliedes angeordnet und durch eine gemeinsame Schraubendruckfeder belastet sind ( DE- C - 44 36 326 ).

Der Erfindung liegt die Aufgabe zugrunde, das bekannte Schloß weiter zu verbessern und insbesondere die Anzahl der Bauteile noch weiter zu verringern, die Montage noch weiter zu vereinfachen und die Herstellungskosten noch weiter zu senken.

Diese Aufgabe ist durch die im kennzeichnenden Teil des Patentanspruchs 1 angegebenen Merkmale gelöst. Vorteilhafte Ausgestaltungen des erfindungsgemäßen Schlosses sind in den restlichen Patentansprüchen angegeben.

Nachstehend ist eine Ausführungsform des erfindungsgemäßen Schlosses anhand von Zeichnungen beispielsweise beschrieben. Darin zeigt:
**Fig. 1** die Draufsicht in Richtung des Pfeils I in Fig. 2 bei abgenommenen Deckel;
**Fig. 2** den Längsschnitt entlang der Linie II - II in Fig. 1;
**Fig. 3** den Längsschnitt entlang der Linie III - III in Fig. 2;
**Fig. 4a** den Längsschnitt des Steuergliedes entlang der Linie IV - IV in Fig. 1 in perspektivischer Darstellung, Ansicht von oben;
**Fig. 4b** den Längsschnitt des Steuergliedes entlang der Linie IV - IV in Fig. 1 in perspektivischer Darstellung, Ansicht von unten;
**Fig. 5a** den Längsschnitt des Steuergliedes entlang der Linie V - V in Fig. 1 in perspektivischer Darstellung, Ansicht von oben;
**Fig. 5b** den Längsschnitt des Steuergliedes entlang der Linie V - V in Fig. 1 in perspektivischer Darstellung, Ansicht von unten;
**Fig. 6** den Querschnitt des Steuergliedes entlang der Linie VI - VI in Fig. 2;
**Fig 7** den Querschnitt des Steuergliedes entlang der Linie VII - VII in Fig. 2;
**Fig. 8** den Querschnitt des Steuergliedes entlang der Linie VIII - VIII in Fig. 2;
**Fig. 9** eine Abwicklung derjenigen inneren Nut des Steuergliedes, welche in Fig. 1 links vom Betätigungsglied zur ersten Endfläche des Steuergliedes führt, und zwar bei einer Variante;
**Fig. 10** die Abwicklung gemäß Fig. 9 bei einer weiteren Variante;
**Fig. 11** die Abwicklung nach Fig. 9 bei einer dritten Variante.

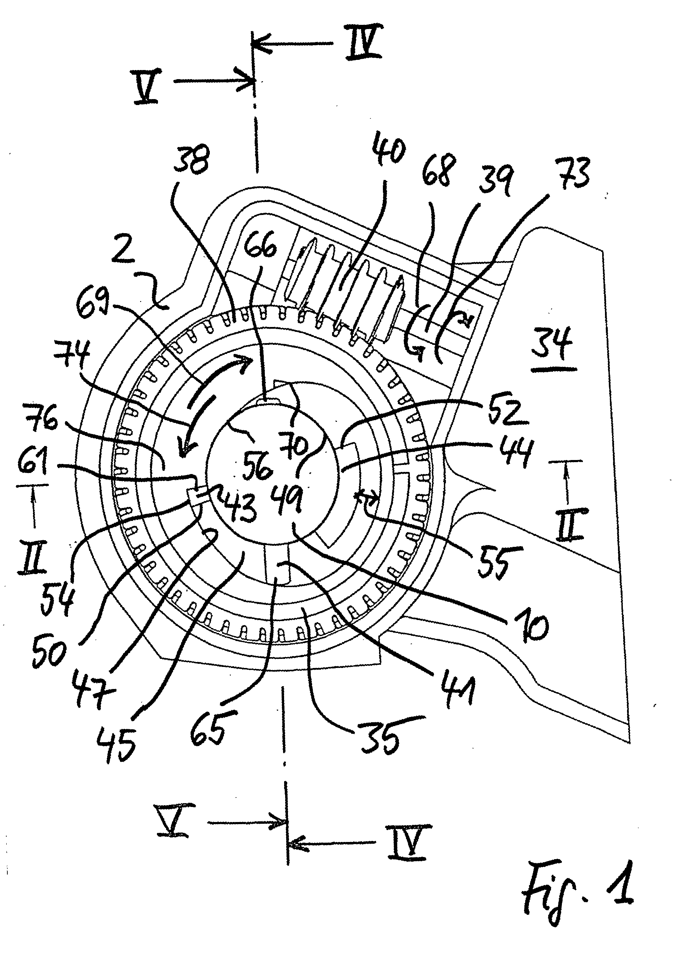

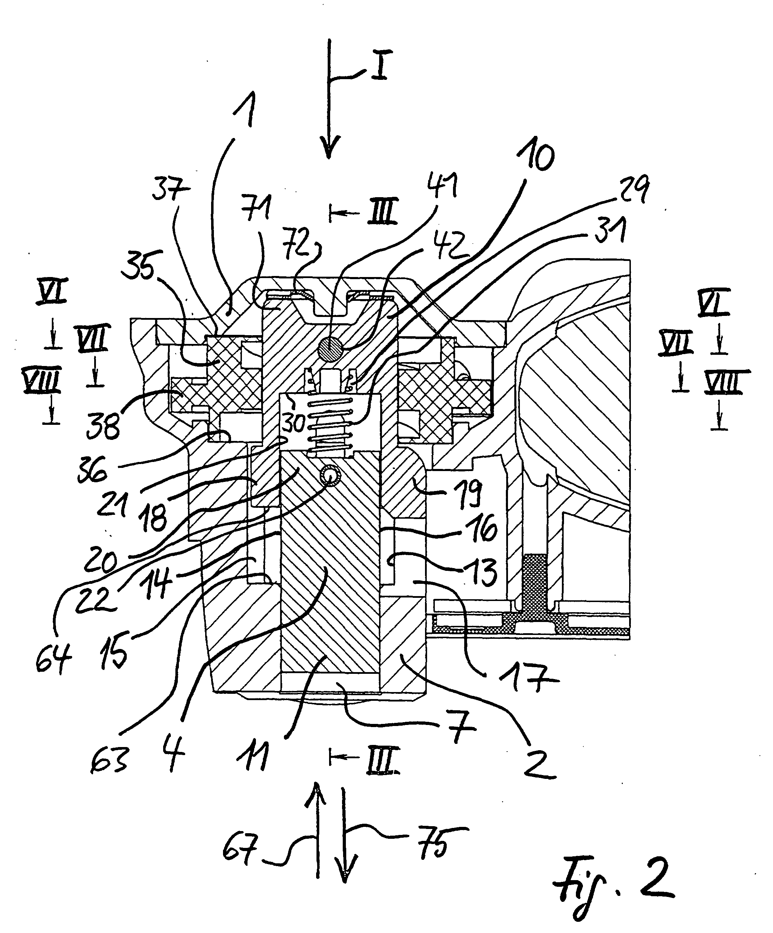

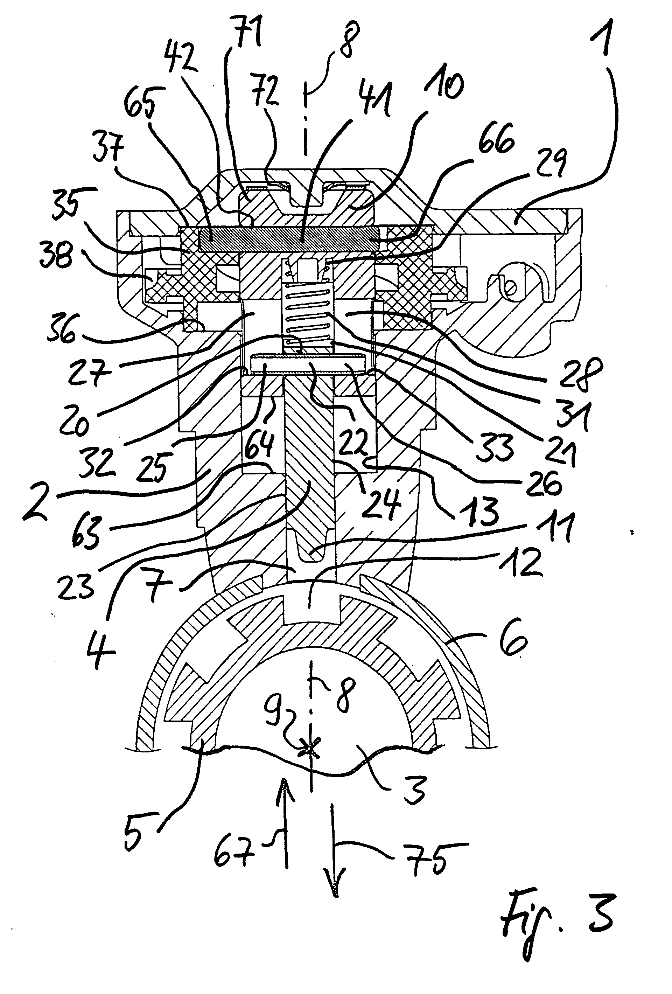

Das in Fig. 1 bis 3 dargestellte Schloß mit einem durch einen Deckel 1 verschlossenen Gehäuse 2 dient zum Verriegeln der in Fig. 3 gezeigten Lenkspindel 3 eines Kraftfahrzeugs mittels eines Sperrgliedes 4, welches mit einer auf der Lenkspindel 3 befestigten Sperrhülse 5 zusammenwirkt. Die Lenkspindel 3 und die Sperrhülse 5 sind von einem Mantelrohr 6 umschlossen, auf welchem das Gehäuse 2 befestigt ist. Das Sperrglied 4 ist als Bolzen mit rechteckigem Querschnitt ausgebildet und in einem Kanal 7 entsprechenden Querschnitts des Gehäuses 2 axial verschieblich gelagert, dessen Längsachse 8 die Längsachse 9 der Lenkspindel 3 rechtwinklig schneidet.

Das Sperrglied 4 ist mittels eines Betätigungsgliedes 10 zwischen einer Verriegelungsstellung, in welcher es mit seinem dem Betätigungsglied 10 abgewandten Ende 11 in eine von mehreren Sperröffnungen 12 der Sperrhülse 5 eingreift, so daß die Lenkspindel 3 nicht mehr gedreht werden kann, und der aus Fig. 3 ersichtlichen Entriegelungsstellung hin- und herbewegbar, in welcher das Sperrglied 4 mit seinem Ende 11 in keine der Sperröffnungen 12 der Sperrhülse 5 eingreift und die Lenkspindel 3 freigibt.

Das Betätigungsglied 10 ist als zylindrischer Bolzen ausgebildet und in einer zylindrischen Bohrung 13 des Gehäuses 2 axial verschieblich gelagert, welche sich koaxial zu dem das Sperrglied 4 aufnehmenden Kanal 7 erstreckt. Gegenüber der in Fig. 2 linken schmalen Seitenfläche 14 des Sperrgliedes 4 mündet eine im Gehäuse 2 ausgebildete Längsnut 15 in die Bohrung 13, gegenüber der in Fig. 2 rechten schmalen Seitenfläche 16 des Sperrgliedes 4 kommuniziert die Bohrung 13 mit einem im Gehäuse 2 ausgebildeten Längsschlitz 17. In die Längsnut 15 ragt ein äußerer radialer Vorsprung 18 des Betätigungsgliedes 10, im Längsschlitz 17 ist eine äußere radiale Nase 19 des Betätigungsgliedes 10 aufgenommen.

Das der Lenkspindel 3 abgewandte Ende 20 des Sperrgliedes 4 ist in einem Sackloch 21 mit einem dem rechteckigen Querschnitt des Sperrgliedes 4 entsprechenden Querschnitt des Betätigungsgliedes 10 aufgenommen und mit einem Querstift 22 versehen, welcher sich senkrecht zu den beiden breiten Seitenflächen 23, 24 des Sperrgliedes 4 erstreckt und dessen beide aus dem Sperrglied 4 ragenden Enden 25, 26 in zwei seitliche Langlöcher 27, 28 des Betätigungsgliedes 10 eingreifen. Zwischen dem Ende 20 des Sperrgliedes 4 und einer ringförmigen Vertiefung 29 im Boden 30 des Sacklochs 21 des Betätigungsgliedes 10 ist eine Schraubendruckfeder 31 angeordnet, welche die beiden vorstehenden Enden 25, 26 des Querstiftes 22 des Sperrgliedes 4 gegen die der Lenkspindel 3 benachbarten Enden 32, 33 der beiden Langlöcher 27, 28 des Betätigungsgliedes 10 drückt. Das Sperrglied 4 kann gegen die Wirkung der Schraubendruckfeder 31 in das Sackloch 21 des Betätigungsgliedes 10 hineinlaufen, falls bei der Bewegung des Sperrgliedes 4 mittels des Betätigungsgliedes 10 in die Verriegelungsstellung keine Sperröffnung 12 der auf der Lenkspindel 3 sitzenden Sperrhülse 5 auf das Sperrglied 4 ausgerichtet sein sollte, um dessen freies Ende 11 aufzunehmen.

Zur Axialverschiebung des Betätigungsgliedes 10 in die Stellung gemäß Fig. 2 und 3 unter Mitnahme des Sperrgliedes 4 in die Entriegelungsstellung und in der entgegengesetzten Richtung unter Mitnahme des Sperrgliedes 4 in die Verriegelungsstellung ist ein mittels eines Elektromotors 34 mit umkehrbarer Drehrichtung hin- und herdrehbares Steuerglied 35 vorgesehen. Das Steuerglied 35 ist koaxial zum Betätigungsglied 10 angeordnet und umgibt das Betätigungsglied 10, ist im Gehäuse 2 um die gemeinsame Längsachse 8 des Sperrglied-Kanals 7 und der Betätigungsglied-Bohrung 13 zwischen einer zur Längsachse 8 koaxialen Ringfläche 36 des Gehäuses 2 und einer zur Längsachse 8 koaxialen Ringfläche 37 des Deckels 1 drehbar gelagert und ist als Schneckenrad mit einer Außenverzahnung 38 ausgebildet, in welche eine auf der Ausgangswelle 39 des Elektromotors 34 befestigte Antriebsschnecke 40 eingreift. Beim Elektromotor 34 kann es sich um einen Zwölf-Volt-Gleichstrommotor handeln, dessen Drehrichtung durch Umpolen umgekehrt werden kann und welcher dann stillsteht, wenn er stromlos ist.

Das äußere Steuerglied 35 wirkt mit einem zylindrischen Querstift 41 des inneren Betätigungsgliedes 10 zusammen, welcher in einer zylindrischen Querbohrung 42 des Betätigungsgliedes 10 axial verschieblich gelagert ist. Dazu ist das Steuerglied 35 mit zwei schraubenlinienförmig verlaufenden inneren Nuten 43, 44 und zwei ebenen Endflächen 45, 46 versehen, welche jeweils senkrecht zur Drehachse 8 des Steuergliedes 35 orientiert sind, zwischen welchen sich die beiden Nuten 43, 44 erstrecken und welche jeweils durch eine in bestimmter Weise verlaufende Seitenflanke 47 bzw. 48 begrenzt sind.

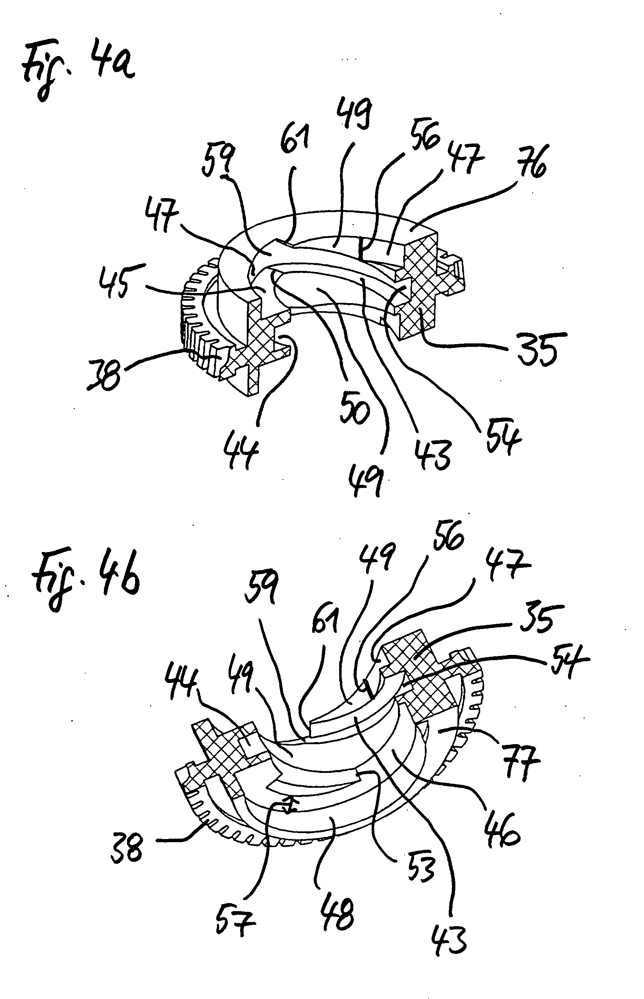

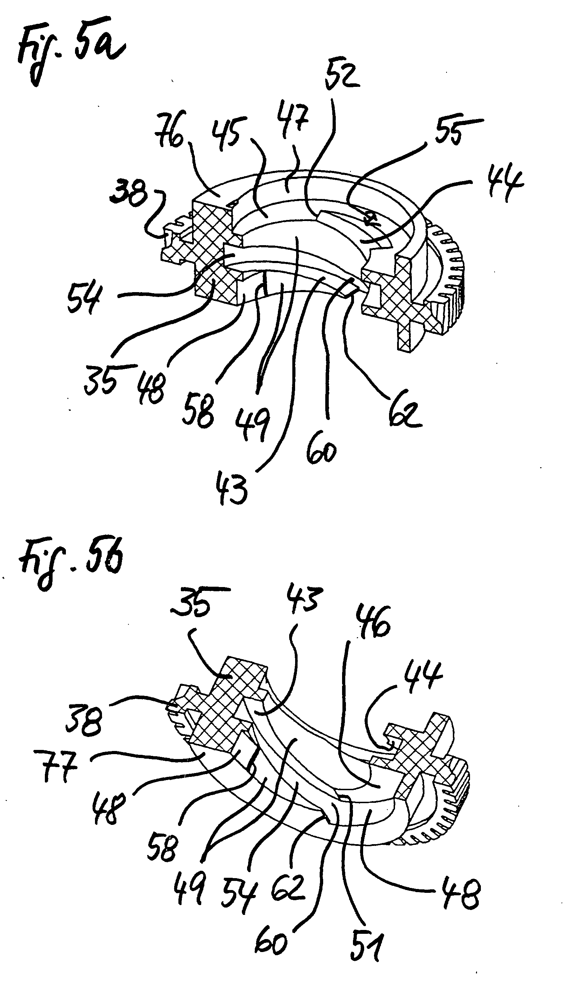

Wie besonders deutlich aus Fig. 4a bis 5b ersichtlich, erstrecken sich die beiden inneren Nuten 43, 44 des Steuergliedes 35 entlang der zylindrischen Bohrung 49 des Steuergliedes 35, welche zur Aufnahme des Betätigungsgliedes 10 dient. Die in Fig. 1 links vom Betätigungsglied 10 zu der der Lenkspindel 3 ferneren, ersten Endfläche 45 des Steuergliedes 35 führende erste Nut 43 geht an einem ersten Ende 50 (Fig. 4a) auf die erste Endfläche 45 und an einem zweiten Ende 51 (Fig. 5b) auf die der Lenkspindel 3 nähere, zweite Endfläche 46 des Steuergliedes 35 über. Die in Fig. 1 rechts vom Betätigungsglied 10 zur ersten Endfläche 45 führende zweite Nut 44 geht an einem ersten Ende 52 ( Fig. 5a) auf die erste Endfläche 45 und an einem zweiten Ende 53 (Fig. 4b) auf die zweite Endfläche 46 über.

Die senkrechte Seitenflanke 47 der ersten Endfläche 45 des Steuergliedes 35 verläuft vom Boden 54 der ersten Nut 43 des Steuergliedes 35 außen in einem gewissen Abstand 55 an der zweiten Nut 44 des Steuergliedes 35 vorbei zu der der Aufnahme des Betätigungsgliedes 10 dienenden Bohrung 49 des Steuergliedes 35 hin, um am betreffenden Ende 56 in die Bohrung 49 überzugehenden (Fig. 4a, 5a). Auch die senkrechte Seitenflanke 48 der zweiten Endfläche 46 des Steuergliedes 35 verläuft vom Boden 54 der ersten Nut 43 außen in einem gewissen Abstand 57 an der zweiten Nut 44 vorbei zur Bohrung 49 hin, um am betreffenden Ende 58 in die Bohrung 49 überzugehen (Fig. 4b, 5b).

Aus fertigungstechnischen Gründen weisen die beiden Mündungen 59, 60 der ersten Nut 43 des Steuergliedes 35 auf der ersten Endfläche 45 des Steuergliedes 35 ( Fig. 4a, 4b) bzw. auf der zweiten Endfläche 46 des Steuergliedes 35 ( Fig. 5a, 5b) jeweils auf der der ersten Endfläche 45 fernen und dem ersten Ende 50 der ersten Nut 43 gegenüberliegenden Seite bzw. auf der der zweiten Endfläche 46 fernen und dem zweiten Ende 51 der ersten Nut 43 gegenüberliegenden Seite eine Stirnfläche 61 bzw. 62 auf, welche sich in einer die Drehachse 8 des Steuergliedes 35 enthaltenden Ebene erstreckt.

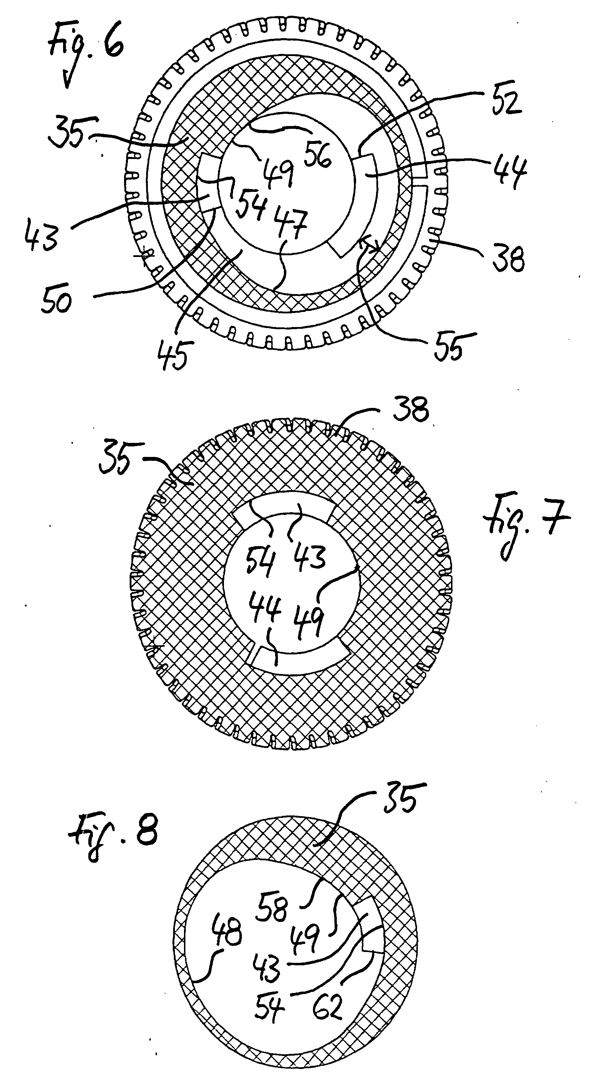

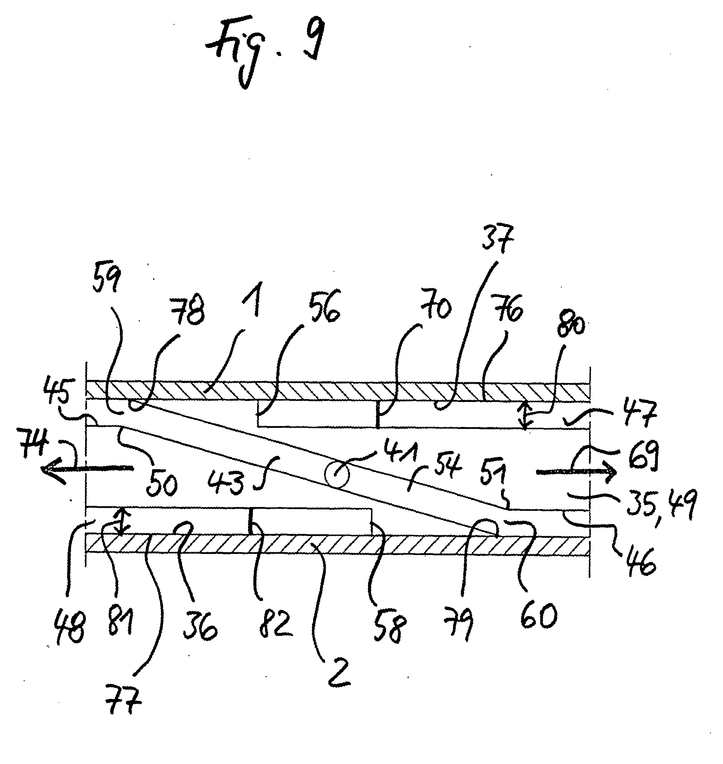

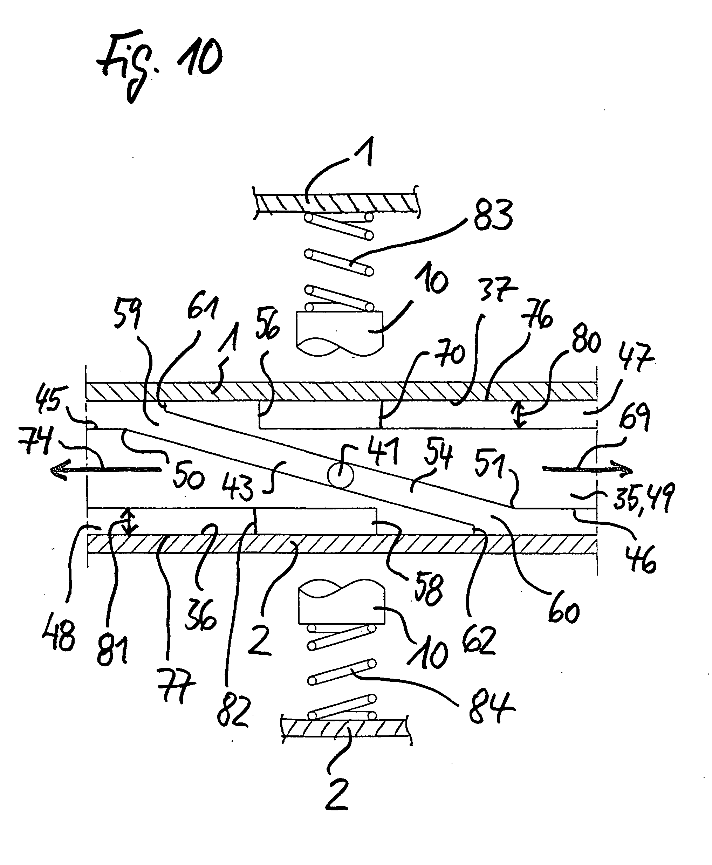

Die Fig. 6 bis 8 verdeutlichen die geschilderte Ausbildung des Steuergliedes 35 weiterhin.

Das geschilderte Lenkschloß für Kraftfahrzeuge funktioniert folgendermaßen.

Wenn sich das Sperrglied 4 in der Verriegelungsstellung befindet, dann liegt das Betätigungsglied 10 an einem gehäusefesten Anschlag 63 an, nämlich mit seiner das Sperrglied 4 umgebenden Stirnfläche 64 an dem den Anschlag 63 bildenden Boden der Bohrung 13 des Gehäuses 2, in welcher das Betätigungsglied 10 angeordnet ist, wobei der Querstift 41 des Betätigungsgliedes 10 bzw. die beiden Enden 65, 66 des Querstiftes 41, welche aus der Querbohrung 42 des Betätigungsgliedes 10 hervorragen, sich unmittelbar neben der zweiten Endfläche 46 des Steuergliedes 35 erstreckt bzw. erstrecken, und zwar außerhalb der Bahn, entlang welcher sich die Stirnfläche 62 der der zweiten Endfläche 46 zugeordneten Mündung 60 der ersten Nut 43 des Steuergliedes 35 bewegt, wenn das Steuerglied 35 gedreht wird.

Um das Sperrglied 4 aus der Verriegelungsstellung und das Betätigungsglied 10 aus der erläuterten Axialstellung in Richtung des Pfeils 67 in Fig. 2, 3 axial in die Entriegelungsstellung bzw. in die entsprechende Axialstellung gemäß Fig. 2, 3 zu verschieben, wird der Elektromotor 34 eingeschaltet, so daß er die Antriebsschnecke 40 in Richtung des Pfeils 68 und das Steuerglied 35 in Richtung des Pfeils 69 in Fig. 1 dreht. Dieses hat zur Folge, daß die beiden aus der Querbohrung 42 des Betätigungsgliedes 10 vorstehenden Enden 65, 66 des Querstiftes 41 des Betätigungsgliedes 10 die zweite Endfläche 46 des Steuergliedes 35 verlassen und in dessen beide schraubenlinienförmig verlaufende Nuten 43, 44 eintreten, um in den Nuten 43, 44 von deren zweiten Enden 51, 53 zu deren ersten Enden 50, 52 zu laufen. In der entsprechenden Drehstellung des Steuergliedes 35 hat das Betätigungsglied 10 diejenige Axialstellung erreicht, in welcher das Sperrglied 4 die Entriegelungsstellung einnimmt und welche das Betätigungsglied 10 auch dann beibehält, wenn sich das Steuerglied 35 in Richtung des Pfeils 69 weiterdreht, so daß das Sperrglied 4 dann ebenfalls in der Entriegelungsstellung bleibt.

In diesem Fall gehen nämlich die beiden aus der Querbohrung 42 des Betätigungsgliedes 10 ragenden Enden 65, 66 von dessen Querstift 41 auf die erste Endfläche 45 des Steuergliedes 35 über, um auf der ersten Endfläche 45 von den ersten Enden 50, 52 der Nuten 43, 44 des Steuergliedes 35 weg zu laufen. Dabei kommt das in Fig. 1 obere Querstiftende 66 an der Seitenflanke 47 der ersten Endfläche 45 zur Anlage, und zwar an der Stelle 70, um bei der weiteren Drehung des Steuergliedes 35 in Richtung des Pfeils 69 durch den Abschnitt der Seitenflanke 47, welcher sich zwischen der Stelle 70 und dem Ende 56 der Seitenflanke 47 erstreckt, in die Querbohrung 42 des Betätigungsgliedes 10 hineingeschoben zu werden, so daß das in Fig. 1 untere Querstiftende 65 sich entsprechend weit aus der Querbohrung 42 des Betätigungsgliedes 10 herausbewegt, um auf der ersten Endfläche 45 über die zweite Nut 44 hinwegzulaufen und dann seinerseits durch die Seitenflanke 47 in die Querbohrung 42 des Betätigungsgliedes 10 hineingeschoben zu werden, und zwar durch den Seitenflankenabschnitt zwischen dem ersten Ende 52 der zweiten Nut 44 und dem Ende 56 der Seitenflanke 47, wobei das andere Querstiftende 66 sich aus der Querbohrung 42 des Betätigungsgliedes 10 auf die erste Endfläche 45 schiebt. Solange sich das Steuerglied 35 in Richtung des Pfeils 69 dreht, kann der Querstift 41 des Betätigungsgliedes 10 die erste Endfläche 45 des Steuergliedes 35 nicht verlassen, so daß das Betätigungsglied 10 in der aus Fig. 2, 3 ersichtlichen Axialstellung bleibt, in welcher eine zwischen dem Deckel 1 des Gehäuses 2 und dem deckelseitigen Ende 71 des Betätigungsgliedes 10 angeordnete Scheibenfeder 72 den Querstift 41 bzw. dessen beide aus der Querbohrung 42 des Betätigungsgliedes 10 vorstehende Enden 65, 66 gegen die erste Endfläche 45 und aus der Bahn drückt, entlang welcher sich die Stirnfläche 61 der der ersten Endfläche 45 zugeordneten Mündung 59 der ersten Nut 43 des Steuergliedes 35 bewegt, wenn das Steuerglied 35 gedreht wird. Das Sperrglied 4 verharrt dementsprechend in der Entriegelungsstellung gemäß Fig. 2, 3.

Erst dann, wenn der Elektromotor 34 in der umgekehrten Richtung umläuft und die Antriebsschnecke 40 sowie das Steuerglied 35 in der entgegengesetzten Richtung dreht, nämlich die Antriebsschnecke 40 in Richtung des Pfeils 73 und das Steuerglied 35 in Richtung des Pfeils 74 in Fig. 1, werden das Sperrglied 4 aus der Entriegelungsstellung und das Betätigungsglied 10 aus der entsprechenden Axialstellung gemäß Fig. 2, 3 in Richtung des Pfeils 75 in Fig. 2, 3 axial in die Verriegelungsstellung bzw. in die entsprechende Axialstellung geschoben. Dieses beginnt, sobald die beiden aus der Querbohrung 42 des Betätigungsgliedes 10 vorstehenden Enden 65, 66 des Querstiftes 41 des Betätigungsgliedes 10 die erste Endfläche 45 des Steuergliedes 35 verlassen und in die beiden schraubenlinienförmig verlaufenden Nuten 43, 44 des Steuergliedes 35 an deren ersten Enden 50, 52 eintreten, und ist abgeschlossen, sobald die Querstiftenden 65, 66 die Nuten 43, 44 an deren zweiten Enden 51, 53 verlassen und auf die zweite Endfläche 46 des Steuergliedes 35 übergehen. Das Steuerglied 35 kann dann noch beliebig in Richtung des Pfeils 74 weitergedreht werden, ohne irgendeine Bewegung des Betätigungsgliedes 10 und des Sperrgliedes 4 zu bewirken, weil die Seitenflanke 48 der zweiten Endfläche 46 analog der Seitenflanke 47 der ersten Endfläche 45 des Steuergliedes 35 verläuft und eine analoge Axialverschiebung des Querstiftes 41 des Betätigungsgliedes 10 in dessen Querbohrung 42 bewirkt.

Der Elektromotor 34 muß also nicht sofort stillstehen, wenn das Sperrglied 4 die Entriegelungsstellung bzw. die Verriegelungsstellung und das Betätigungsglied 10 die jeweils entsprechende Axialstellung erreicht hat. Vielmehr kann er dann durchaus in Richtung des Pfeils 68 bzw. in Richtung des Pfeils 73 weiterlaufen und das Steuerglied 35 um einen beliebigen Winkel in Richtung des Pfeils 69 bzw. in Richtung des Pfeils 74 weiterdrehen, ohne daß sich das Sperrglied 4 und das Betätigungsglied 10 bewegen und das Sperrglied 4 die Entriegelungsstellung bzw. die Verriegelungsstellung und das Betätigungsglied 10 die jeweils entsprechende Axialstellung verlassen würden.

Es ist auch nicht erforderlich, daß der Elektromotor 34 das Steuerglied 35 nur verhältnismäßig langsam dreht. Vielmehr funktioniert das geschilderte Zusammenwirken des Steuergliedes 35 und des Sperrgliedes 4 über das Betätigungsglied 10 auch dann zuverlässig, wenn das Steuerglied 35 sich relativ schnell dreht.

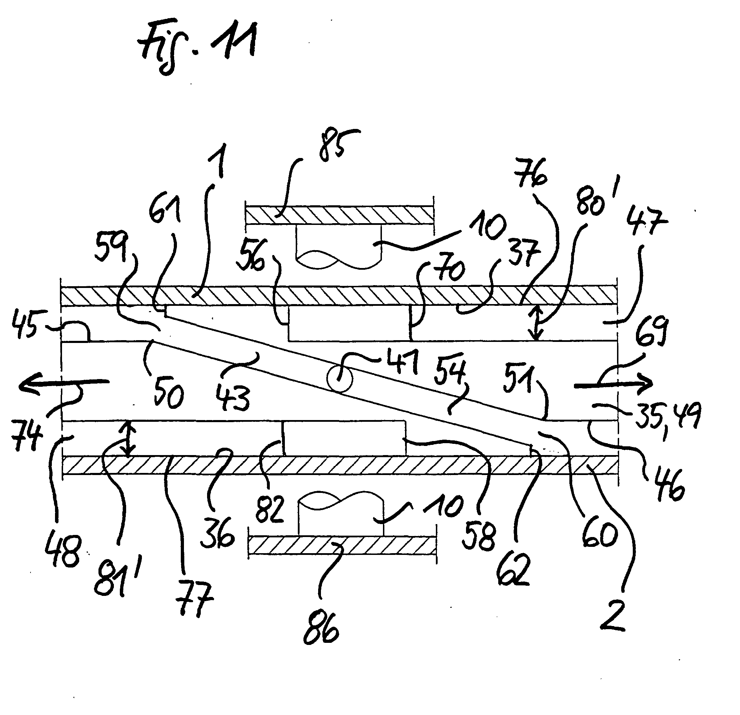

In Fig. 9 bis 11 sind verschiedene Möglichkeiten sowohl der Ausbildung der beiden Mündungen 59, 60 der ersten Nut 43 und der beiden Endflächen 45, 46 des Steuergliedes 35 als auch der Abstützung des Betätigungsgliedes 10 im Gehäuse 2 schematisch veranschaulicht.

Gemäß Fig. 9 erstreckt sich die erste Nut 43 des Steuergliedes 35 einerseits bis zu der an der Ringfläche 37 des Deckels 1 des Gehäuses 2 anliegenden ersten Stirnfläche 76 des Steuergliedes 35 und andererseits bis zu der an der Ringfläche 36 des Gehäuses 2 anliegenden zweiten Stirnfläche 77 des Steuergliedes 35, so daß die der ersten Endfläche 45 des Steuergliedes 35 zugeordnete Mündung 59 der ersten Nut 43 auf der der ersten Endfläche 45 fernen und dem ersten Ende 50 der ersten Nut 43 gegenüberliegenden Seite von einer scharfen, linienförmigen Kante 78 und die der zweiten Endfläche 46 des Steuergliedes 35 zugeordnete Mündung 60 der ersten Nut 43 auf der der zweiten Endfläche 46 fernen und dem zweiten Ende 51 der ersten Nut 43 gegenüberliegenden Seite ebenfalls von einer scharfen, linienförmigen Kante 79 begrenzt ist. Die erste Endfläche 45 ist in einem Abstand 80 von der ersten Stirnfläche 76 des Steuergliedes 35 angeordnet, welcher dem Durchmesser des Querstiftes 41 des Betätigungsgliedes 10 angepaßt ist. Auch der Abstand 81 der zweiten Endfläche 46 von der zweiten Stirnfläche 77 des Steuergliedes 35 entspricht im wesentlichen dem Durchmesser des Querstiftes 41 des Betätigungsgliedes 10. Das Betätigungsglied 10 ist ausschließlich mittels des Querstiftes 41 gegenüber dem Gehäuse 2 abgestützt.

Wenn das Steuerglied 35 sich in Richtung des Pfeils 69 in Fig. 9 dreht und der Querstift 41 des Betätigungsgliedes 10 zwischen die zweite Endfläche 46 des Steuergliedes 35 und die Ringfläche 36 des Gehäuses 2 ragt, dann tritt der Querstift 41 an der der zweiten Endfläche 46 zugeordneten Mündung 60 der ersten Nut 43 des Steuergliedes 35 in die erste Nut 43 ein, um darin bis zu ihrer der ersten Endfläche 45 des Steuergliedes 35 zugeordneten Mündung 59 zu laufen und an ihrem ersten Ende 50 auf die erste Endfläche 45 überzugehen, welche dann in Richtung des Pfeils 69 am Querstift 41 vorbeiläuft. Sobald dabei die Stelle 70 der Seitenflanke 47 der ersten Endfläche 45 den Querstift 41 passiert, wird der Querstift 41 durch die Seitenflanke 47 von der Zeichnungsebene der Fig. 9 weg auf den Betrachter zu bewegt, bis das Ende 56 der Seitenflanke 47 den Querstift 41 passiert.

Wenn das Steuerglied 35 sich dann in umgekehrter Richtung, nämlich in Richtung des Pfeils 74 in Fig. 9 dreht, dann tritt der Querstift 41 an der der ersten Endfläche 45 zugeordneten Mündung 59 der ersten Nut 43 des Steuergliedes 35 in die erste Nut 43 ein, um darin bis zu ihrer der zweiten Endfläche 46 des Steuergliedes 35 zugeordneten Mündung 60 zu laufen und an ihrem zweiten Ende 51 auf die zweite Endfläche 46 überzugehen, welche dann in Richtung des Pfeils 74 am Querstift 41 vorbeiläuft. Sobald dabei die der Stelle 70 der Seitenflanke 47 der ersten Endfläche 45 entsprechende Stelle 82 der Seitenflanke 48 der zweiten Endfläche 46 den Querstift 41 passiert, wird der Querstift 41 durch die Seitenflanke 48 von der Zeichnungsebene der Fig. 9 weg auf den Betrachter zu bewegt, bis das Ende 58 der Seitenflanke 48 den Querstift 41 passiert.

Die Varianten gemäß Fig. 10, 11 unterscheiden sich nur dadurch von der Variante nach Fig. 9, daß die beiden Mündungen 59, 60 der ersten Nut 43 des Steuergliedes 35 jeweils die geschilderte Stirnfläche 61 bzw. 62 aufweisen und das Betätigungsglied 10 über eine Druckfeder 83 am Deckel 1 des Gehäuses 2 und eine Druckfeder 84 am Gehäuse 2 abgestützt ist bzw. mit einem Anschlag 85 am Deckel 1 und einem Anschlag 86 am Gehäuse 2 zusammenwirkt. Die Druckfedern 83, 84 drücken den Querstift 41 des Betätigungsgliedes 10 jeweils gegen die erste Endfläche 45 des Steuergliedes 35 und von der Stirnfläche 61 der zugehörigen Mündung 59 weg bzw. gegen die zweite Endfläche 46 des Steuergliedes 35 und von der Stirnfläche 62 der zugehörigen Mündung 60 weg. Die Anschläge 85, 86 halten den Querstift 41 des Betätigungsgliedes 10 jeweils an der ersten Endfläche 45 und von der Stirnfläche 61 der zugehörigen Mündung 59 entfernt bzw. an der zweiten Endfläche 46 und von der Stirnfläche 62 der zugehörigen Mündung 60 entfernt. Bei der Variante nach Fig. 10 sind die Stirnflächen 61, 62 der Mündungen 59, 60 gegenüber den Enden 50, 51 der ersten Nut 43 entsprechend weit zu den Enden 56, 58 der Seitenflanken 47, 48 der Endflächen 45, 46 des Steuergliedes 35 hin versetzt. Bei der Variante gemäß Fig. 11 erstrecken sich die Stirnflächen 76, 77 des Steuergliedes 35 jeweils in einem entsprechend größeren Abstand 80' bzw. 81' von der ersten Endfläche 45 bzw. von der zweiten Endfläche 46 des Steuergliedes 35.

## Patentansprüche

1. Schloß, insbesondere zum Verriegeln der Lenkspindel (3) oder der Zahnstange des Lenkgetriebes oder der Ausgangswelle des Antriebsgetriebes eines Kraftfahrzeugs, mit einem Sperrglied (4), welches zwischen einer Verriegelungsstellung und einer Entriegelungsstellung hin- und herbewegbar ist, und mit einem mittels eines Antriebs (34) hin- und herdrehbaren Steuerglied (35) zur Axialverschiebung eines mit dem Sperrglied zusammenwirkenden Betätigungsgliedes (10) oder des Sperrgliedes selbst in der einen oder in der anderen Richtung, wobei das Betätigungsglied (10) oder das Sperrglied und das Steuerglied (35) koaxial angeordnet sind, **dadurch gekennzeichnet, daß** das Betätigungsglied oder das Sperrglied und das steuerglied über
a) einen Querstift (41), welcher in einer Querbohrung (42) des inneren Betätigungsgliedes (10) oder des inneren Sperrgliedes axial verschieblich ist, und
b) zwei schraubenlinienförmig verlaufende innere Nuten (43,44) sowie eine ebene Endfläche (45) des äußeren Steuergliedes (35), welche sich senkrecht zur Drehachse (8) des Steuergliedes (35) erstreckt, an die beiden Nuten (43,44) anschließt und durch eine Seitenflanke (47) begrenzt ist, die vom Boden (54) einer Nut (43) außen im Abstand (55) an der anderen Nut (44) vorbei zum Betätigungsglied (10) oder Sperrglied hin verläuft,
derart zusammenwirken, daß das Betätigungsglied (10) oder das Sperrglied beim Drehen des Steuergliedes (35) in derjenigen Richtung (69) , in welcher die beiden aus der Querbohrung (42) des Betätigungsgliedes (10) oder des Sperrgliedes vorstehenden Enden (65,66) des Querstiftes (41) in den Nuten (43,44) zu der Endfläche (45) des Steuergliedes (35) hinlaufen, entsprechend axial verschoben wird, um dann, wenn die Enden (65,66) des Querstiftes (41) von den Nuten (43,44) auf die Endfläche (45) übergehen, stillzustehen und in der erreichten Axialstellung zu bleiben, bis das Steuerglied (35) in der entgegengesetzten Richtung (74) gedreht wird und die Enden (65,66) des Querstiftes (41) in den Nuten (43,44) von der Endfläche (45) weg laufen, so daß das Betätigungsglied (10) oder das Sperrglied sich in der entgegengesetzten Richtung axial verschiebt.

2. Schloß nach Anspruch 1, **dadurch gekennzeichnet, daß** die Mündung (59) derjenigen Nut (43) auf der Endfläche (45) des Steuergliedes (35), an deren Boden (54) die Seitenflanke (47) der Endfläche (45) anschließt, auf der der Endfläche (45) fernen Seite eine Stirnfläche (61) aufweist, welche sich in einer die Drehachse (8) des Steuergliedes (35) enthaltenden Ebene erstreckt, und daß das Betätigungsglied (10) oder das Sperrglied federbelastet ist, um den Querstift (41) gegen die Endfläche (45) und von der Stirnfläche (61) weg zu drücken, oder mit einem Anschlag (85) zusammenwirkt, um den Querstift (41) an der Endfläche (45) und von der Stirnfläche (61) entfernt zu halten.

3. Schloß nach Anspruch 1 oder 2, **dadurch gekennzeichnet, daß** die Nuten (43,44) an den von der ersten Endfläche (45) entfernten Enden (51,53) in eine zweite ebene Endfläche (46) des Steuergliedes (35) übergehen, welche sich senkrecht zur Drehachse (8) des Steuergliedes (35) erstreckt und durch eine Seitenflanke (48) begrenzt ist, die vom Boden (54) einer Nut (43) außen im Abstand (57) an der anderen Nut (44) vorbei zum Betätigungsglied (10) oder Sperrglied hin verläuft, so daß das Betätigungsglied (10) oder das Sperrglied beim Drehen des Steuergliedes (35) in derjenigen Richtung (74) , in welcher die beiden aus der Querbohrung (42) des Betätigungsgliedes (10) oder des Sperrgliedes vorstehenden Enden (65,66) des Querstiftes (41) in den Nuten (43,44) von der ersten Endfläche (45) zu der zweiten Endfläche (46) des Steuergliedes (35) laufen, nach der entsprechenden Axialverschiebung des Betätigungsgliedes (10) oder des Sperrgliedes dann, wenn die Enden (65,66) des Querstiftes (41) von den Nuten (43,44) auf die zweite Endfläche (46) übergehen, stillsteht und in der erreichten Axialstellung bleibt, bis das Steuerglied (35) in der entgegengesetzten Richtung (69) gedreht wird und die Enden (65,66) des Querstiftes (41) in den Nuten (43,44) von der zweiten Endfläche (46) zu der ersten Endfläche (45) laufen, so daß das Betätigungsglied (10) oder das Sperrglied sich in der entgegengesetzten Richtung axial verschiebt.

4. Schloß nach Anspruch 3, **dadurch gekennzeichnet, daß** die Mündung (60) derjenigen Nut (43) auf der zweiten Endfläche (46) des Steuergliedes (35), an deren Boden (54) die Seitenflanke (48) der zweiten Endfläche (46) anschließt, auf der der zweiten Endfläche (46) fernen Seite eine Stirnfläche (62) aufweist, welche sich in einer die Drehachse (8) des Steuergliedes (35) enthaltenden Ebene erstreckt, und daß das Betätigungsglied (10) oder das Sperrglied federbelastet ist, um den Querstift (41) gegen die zweite Endfläche (46) und von der Stirnfläche (62) weg zu drücken, oder mit einem Anschlag (63,86) zusammenwirkt, um den Querstift (41) an der zweiten Endfläche (46) und von der Stirnfläche (62) entfernt zu halten.

5. Schloß nach einem der vorstehenden Ansprüche, **dadurch gekennzeichnet, daß** das Steuerglied (35) eine Außenverzahnung (35) für den Eingriff eines Antriebsritzels oder einer Antriebsschnecke (40) aufweist.

6. Schloß nach einem der vorstehenden Ansprüche, **dadurch gekennzeichnet, daß** ein Elektromotor (34) mit umkehrbarer Drehrichtung als Antrieb für das Steuerglied (35) vorgesehen ist.

## Claims

1. Lock, especially for locking the steering spindle (3) or the gear rack of the steering gear or the output shaft of the drive gear of a motor vehicle, with a locking element (4), which can be moved to and fro between a locked position and an unlocked position, and with a control element (35), which can be rotated to and fro by means of a drive (34), for the axial displacement in either direction either of a drive element (10) cooperating with the locking element or of the locking element itself, wherein the drive element (10) or the locking element and the control element (35) are arranged in a coaxial manner,
**characterised in that**
the drive element or the locking element and the control element cooperate with one another via
a) a cross-pin (41) which is axially displaceable in a cross-borehole (42) of the inner drive element (10) or of the inner locking element, and
b) two inner helical grooves (43, 44) and a level end surface (45) of the outer control element (35), which extends perpendicular to the axis of rotation (8) of the control element (35), joins the two grooves (43, 44) and is limited by a lateral flank (47), which runs from the base (54) of one groove (43) externally at a distance (55) to and past the other groove (44) towards the drive element (10) or the locking element, in such a manner that, when the control element (35) is rotated in the direction (69), in which the two ends (65, 66) of the cross-pin (41) projecting from the cross-borehole (42) of the drive element (10) or of the locking element, run within the grooves (43, 44) towards the end surface (45) of the control element (35), the drive element (10) or the locking element is displaced correspondingly in an axial manner, and, after the ends (65, 66) of the cross-pin (41) have moved from the grooves (43, 44) onto the end surface (45), stands still and remains in the axial position reached, until the control element (35) is rotated in the opposite direction (74), and the ends (65, 66) of the cross-pin (41) run within the grooves (43, 44) away from the end surface (45), so that the drive element (10) or the locking element is axially displaced in the opposite direction.

2. Lock according to claim 1, **characterised in that** the opening (59) of the groove (43) on the end surface (45) of the control element (35), the base (54) of which joins the lateral flank (47) of the end surface (45) has, on the side remote from the end surface (45), a front face (61), which extends in a plane containing the axis of rotation (8) of the control element (35), and that the drive element (10) or the locking element is spring loaded, in order to press the cross-pin (41) against the end surface (45) and away from the front face (61), or cooperates with a stop (85), in order to hold the cross-pin (41) at the end surface (45) and away from the front face (61).

3. Lock according to claim 1 or 2, **characterised in that** the grooves (43, 44) merge at the ends (51, 53) remote from the first end surface (45) into a second level end surface (46) of the control element (35), which extends perpendicular to the rotational axis (8) of the control element (35) and is limited by a lateral flank (48) which runs from the base (54) of one groove (43) externally at a distance (57) to and past the other groove (44) towards the drive element (10) or locking element, so that, when the control element (35) is rotated in the direction (74), in which the two ends (65, 66) of the cross-pin (41) projecting from the cross-borehole (42) of the drive element (10) or of the locking element run within the grooves (43, 44) from the first end surface (45) to the second end surface (46) of the control element (35), after the corresponding axial displacement of the drive element (10) or of the locking element, and after the ends (65, 66) of the cross-pin (41) have moved from the grooves (43, 44) onto the second end surface (46), the drive element (10) or the locking element stands still and remains in the axial position reached until the control element (35) is rotated in the opposite direction (69), and the ends (65, 66) of the cross-pin (41) run within the grooves (43, 44) from the second end surface (46) to the first end surface (45), so that the drive element (10) or the locking element is axially displaced in the opposite direction.

4. Lock according to claim 3, **characterised in that** the opening (60) of the groove (43) on the second end surface (46) of the control element (35), the base (54) of which joins the lateral flank (48) of the second end surface (46), has, on the side remote from the second end surface (46), a front face (62), which extends in a plane containing the rotational axis (8) of the control element (35), and that the drive element (10) or the locking element is spring loaded, in order to press the cross-pin (41) against the second end surface (46) and away from the front face (62), or cooperates with a stop (63, 86) in order to hold the cross-pin (41) at the second end surface (46) and away from the front face (62).

5. Lock according to any one of the preceding claims, **characterised in that** the control element (35) provides external teeth (38) for the engagement of a drive pinion or a drive screw (40).

6. Lock according to any one of the preceding claims, **characterised in that** an electric motor (34) with reversible direction of rotation is provided as the drive for the control element (35).

## Revendications

1. Verrou, notamment destiné au verrouillage de la colonne (3) ou de la crémaillère de direction ou de l'arbre de sortie de la boîte de transmission d'un véhicule à moteur, avec un organe de verrouillage (4) qui peut être déplacé en va-et-vient entre une position de verrouillage et une position de déverrouillage, et avec un organe de commande (35) pouvant être entraîné en rotation en va-et-vient au moyen d'un mécanisme d'entraînement (34) pour le déplacement axial d'un organe d'actionnement (10) coopérant avec l'organe de verrouillage ou de l'organe de verrouillage lui-même dans l'une ou l'autre direction, l'organe d'actionnement (10) ou l'organe de verrouillage et l'organe dé commande (35) étant disposés de façon coaxiale, **caractérisé en ce que** l'organe d'actionnement ou l'organe de verrouillage et l'organe de commande coopèrent par l'intermédiaire :
a) d'une goupille transversale (41) mobile dans le sens axial dans un trou transversal (42) de l'organe d'actionnement intérieur (10) ou de l'organe de verrouillage intérieur, et
b) de deux gorges intérieures (43, 44) hélicoïdales ainsi que d'une surface d'extrémité plane (45) de l'organe de commande extérieur (35), qui s'étend perpendiculairement à l'axe de rotation (8) de l'organe de commande (35), fait suite aux deux gorges (43, 44), et est limitée par un flanc latéral (47) qui part du fond (54) d'une gorge (43) et passe à l'extérieur à distance (55) de l'autre gorge (44) jusqu'à l'organe d'actionnement (10) ou jusqu'à l'organe de verrouillage,
de telle sorte que l'organe d'actionnement (10) ou l'organe de verrouillage, lors de la rotation de l'organe de commande (35) dans le sens (69) dans lequel les deux extrémités (65, 66) de la goupille transversale (41), dépassant du trou transversal (42) de l'organe d'actionnement (10) ou de l'organe de verrouillage, se déplacent dans les gorges (43, 44) jusqu'à la surface d'extrémité (45) de l'organe de commande (35), se déplace de manière correspondante dans le sens axial pour s'arrêter lorsque les extrémités (65, 66) de la goupille transversale (41) passent des gorges (43, 44) à la surface d'extrémité (45) et rester dans la position axiale atteinte jusqu'à ce que l'organe de commande (35) soit tourné en sens inverse (74) et que les extrémités (65, 66) de la goupille transversale (41) s'écartent dans les gorges (43, 44) de la surface d'extrémité (45), de telle sorte que l'organe d'actionnement (10) ou l'organe de verrouillage se déplace dans le sens axial dans la direction opposée.

2. Verrou selon la revendication 1, **caractérisé en ce que** le débouché (59) de la gorge (43) sur la surface d'extrémité (45) de l'organe de commande (35) dont le fond (54) se raccorde au flanc latéral (47) de la surface d'extrémité (45), possède sur le côté éloigné de la surface d'extrémité (45) une face frontale (61) qui s'étend dans un plan contenant l'axe de rotation (8) de l'organe de commande (35), et **en ce que** l'organe d'actionnement (10) ou l'organe de verrouillage est contraint par un ressort de manière à pousser la goupille transversale (41) contre la surface d'extrémité (45) et l'écarter de la face frontale (61), ou coopère avec une butée (85) pour tenir la goupille transversale (41) sur la surface d'extrémité (45) et à distance de la face frontale (61).

3. Verrou selon la revendication 1 ou 2, **caractérisé en ce que** les gorges (43, 44) se raccordent, aux extrémités (51, 53) éloignées de la première surface d'extrémité (45), à une deuxième surface d'extrémité plane (46) de l'organe de commande (35) qui s'étend perpendiculairement à l'axe de rotation (8) de l'organe de commande (35) et qui est délimitée par un flanc latéral (48) partant du fond (54) d'une gorge (43) et passant à l'extérieur à distance (57) de l'autre gorge (44) jusqu'à l'organe d'actionnement (10) ou l'organe de verrouillage, de sorte que l'organe d'actionnement (10) ou l'organe de verrouillage, lors de la rotation de l'organe de commande (35) dans le sens (74) dans lequel les deux extrémités (65, 66) de la goupille transversale (41) dépassant du trou transversal (42) de l'organe d'actionnement (10) ou de l'organe de verrouillage se déplacent dans les gorges (43, 44) de la première surface d'extrémité (45) à la deuxième surface d'extrémité (46) de l'organe de commande (35), s'arrête après le mouvement axial correspondant de l'organe d'actionnement (10) ou de l'organe de verrouillage lorsque les extrémités (65, 66) de la goupille transversale (41) passent des gorges (43, 44) à la deuxième surface d'extrémité (46), et reste dans la position axiale atteinte jusqu'à ce que l'organe de commande (35) soit tourné en sens inverse (69) et que les extrémités (65, 66) de la goupille transversale (41) s'écartent dans les gorges (43, 44) de la deuxième surface d'extrémité (46) vers la première surface d'extrémité (45), de sorte que l'organe d'actionnement (10) ou l'organe de verrouillage se déplace dans le sens axial dans la direction opposée.

4. Verrou selon la revendication 3, **caractérisé en ce que** le débouché (60) de la gorge (43) sur la deuxième surface d'extrémité (46) de l'organe de commande (35) dont le fond (54) se raccorde au flanc latéral (48) de la deuxième surface d'extrémité (46) présente sur le côté éloigné de la deuxième surface d'extrémité (46) une face frontale (62) qui s'étend dans un plan contenant l'axe de rotation (8) de l'organe de commande (35), et **en ce que** l'organe d'actionnement (10) ou l'organe de verrouillage est contraint par un ressort de manière à pousser la goupille transversale (41) contre la deuxième surface d'extrémité (46) et l'écarter de la face frontale (62) ou coopère avec une butée (63, 86) pour tenir la goupille transversale (41) sur la deuxième surface d'extrémité (46) et à distance de la face frontale (62).

5. Verrou selon l'une des revendications précédentes, **caractérisé en ce que** l'organe de commande (35) présente une denture extérieure (38) pour l'engrènement d'un pignon d'entraînement ou d'une vis sans fin d'entraînement (40).

6. Verrou selon l'une des revendications précédentes, **caractérisé en ce qu'**il est prévu un moteur électrique (34) à sens de rotation inversable pour l'entraînement de l'organe de commande (35).
